(19) **Europäisches Patentamt**
**European Patent Office**
**Office européen des brevets**

(11) **EP 2 418 650 B1**

(12) **EUROPEAN PATENT SPECIFICATION**

(45) Date of publication and mention
of the grant of the patent:
**08.10.2014 Bulletin 2014/41**

(51) Int Cl.:
***G21C 17/10*** *(2006.01)*

(21) Application number: **11172120.5**

(22) Date of filing: **30.06.2011**

(54) **Traversing in-core probe drive unit and method for monitoring friction of inside of guide tubes**

Antrieb für durchlaufende Sonde eines Reaktorkerns und Verfahren zur Überwachung der Reibung im Inneren der Führungsrohre

Unité de commande de sonde interne traversante et procédé pour surveiller la friction à l'intérieur des tubes guides

---

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.06.2010 JP 2010150436**

(43) Date of publication of application:
**15.02.2012 Bulletin 2012/07**

(73) Proprietor: **Kabushiki Kaisha Toshiba Tokyo (JP)**

(72) Inventors:
- **Yasuta, Hidehiko**
 **Tokyo (JP)**
- **Kato, Hiromi**
 **Tokyo (JP)**

(74) Representative: **Delumeau, François Guy et al Cabinet Beau de Loménie 158, rue de l'Université 75340 Paris Cedex 07 (FR)**

(56) References cited:
 **JP-A- 5 180 973       JP-A- 7 063 883 US-A1- 2002 144 968**

---

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 418 650 B1

**Description**

Cross-Reference to Related Application

This application is based upon and claims the benefit of priority from Japanese Patent Application No. 2010-150436, filed on June 30, 2010.

Field of the Invention

The present invention relates to a Traversing in-core probe (TIP) drive unit that moves a TIP in a nuclear reactor by feeding and spooling a probe cable in the reactor. More particularly, the invention is directed to a TIP drive unit that calculates a cable drive torque stably.

Background of the invention

In order to measure neutron flux distribution in a nuclear reactor, Local Power Range Monitors (LPRMs) are provided in the reactor. However, the LPRMs are placed in the reactor constantly and difficult to be replaced, and the sensitivity of the LPRMs declines with time. Therefore, the sensitivity of LPRMs needs to be calibrated arbitrarily in order to measure neutron flux distribution in the reactor exactly.

In order to calibrate sensitivity of the LPRMs, a Traversing In-core Prove (TIP) system is provided in the nuclear power plant. The TIP system moves a TIP in calibration tubes provided in the reactor, and a TIP measures neutron flux in the proximity of the LPRMs with moving. By using measuring result of neutron flux, the sensitivity of the LPRMs is calibrated.

The TIP is attached to an edge of a probe cable, and a drive mechanism included in the TIP system moves the TIP in the calibration tubes and in guide tubes introducing the TIP to the calibration tubes by feeding from a storage reel and spooling the probe cable onto the storage reel.

The calibration tubes provided vertically in the reactor and a shape of each guide tube is curved so as to introduce the TIP into the corresponding calibration tube from outside of a pedestal of the reactor. Therefore, in order to reduce friction while the TIP and the probe cable move in the guide tube, the inside of the guide tubes are coated with lubricant.

This lubricant may fall away or may be diminished due to moving of the TIP and the probe cable. In the result, there is a possibility of damaging the TIP and the probe cable when the TIP and the probe cable move at a position where the lubricant fell away. Therefore, the friction at inside of the guide tubes caused by moving of the TIP and the probe cable is measured regularly by measuring cable drive torque, which is torque necessary for feeding and spooling the probe cable.

Previously, utility workers attach a torque wrench to a motor shaft in the TIP system, and measure the cable drive torque. However, the measurements may vary among utility workers. Moreover, because the probe cable in the TIP system is radioactivated, there is a possibility that utility workers are exposed to radiation when the measurement takes a long time.

Japanese Patent Laid-open Publication No. 2002-71483 discloses a TIP system having a torque sensor attached to the motor shaft in the TIP system. And this torque sensor measures cable drive torque automatically.

However, in this TIP system, due to deterioration of the torque sensor, it is difficult to calculate the cable drive torque stably.

Furthermore, Japanese Patent Laid-open Publication No. Syo 63-163196 discloses a TIP system having a processor calculating the cable drive torque automatically by using a value of supply power to the motor, a predefined rotating speed of the motor, and a loss torque that is a torque necessary for driving a drive mechanism including the motor.

However, in this TIP system, an inverter driving the motor generates high- frequency noise, and the signal indicating fluctuation of torque may hide amongst this noise. In the result, it is difficult to calculate the cable drive torque exactly.

**SUMMARY OF THE INVENTION**

Accordingly, it is an object of the invention to provide a TIP system that calculates the cable drive torque stably.

In accordance with the invention, a Traversing In-core Probe (TIP) drive unit is defined according to the subject-matter of claim 1. Also, a method for monitoring friction is defined according to claim 9.

Additional objects and advantages of the invention will be set forth in part in the description which follows, and in part will be obvious from the description, or may be learned by practice of the invention. The objects and advantages of the invention will be realized and attained by means of the elements and combinations particularly pointed out in the appended claims.

It is to be understood that both the foregoing general description and the following detailed description are exemplary and explanatory only and are not restrictive of the invention, as claimed.

**BRIEF DESCRIPTION OF THE DRAWINGS**

The accompanying drawing, which is incorporated in and constitute a part of the specification, illustrates an embodiment of the invention and together with the description, serve to explain the principles of the invention.

Figure 1 is a block schematic diagram illustrating a TIP drive unit according to one embodiment of the invention.

Figure 2 is a graphic representation illustrating all-torque and cable drive torque against insert distance of the TIP into the guide tubes.

Figure 3 is a graphic representation illustrating all-torque and cable drive torque against insert distance of the TIP into the guide tubes.

**DESCRIPTION OF THE EMBODIMENTS**

Reference will now be made in detail to the present embodiment of the invention, an example of which is illustrated in the accompanying drawing. Wherever possible, the same reference numbers will be used throughout the drawing to refer to the same or like parts.

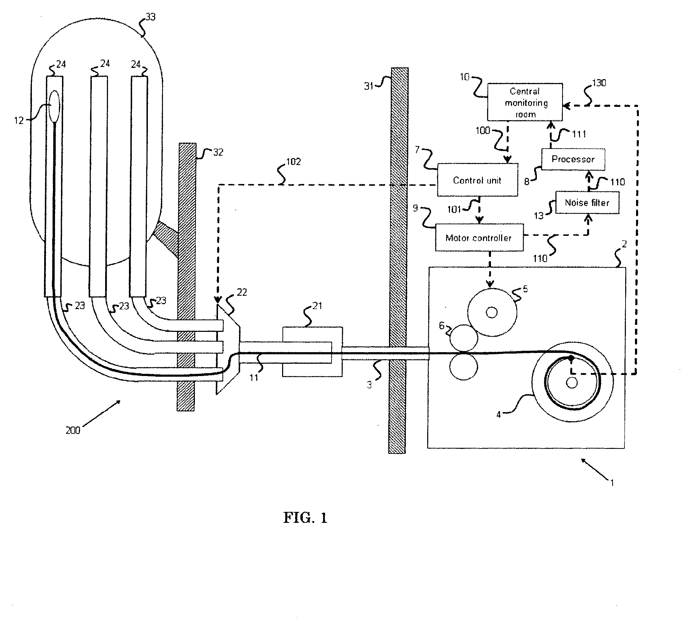

Referring to FIG. 1 of the drawing, in a reactor container 31, a reactor pressure vessel 33 is stabilized on a pedestal 32. According to one exemplary embodiment, a TIP system 200 includes a TIP drive unit 1, a probe cable 11, a TIP 12, a shielding vessel 21, an indexing device 22, guide tubes 23, and calibration tubes 24.

Furthermore, in accordance with an exemplary embodiment, the TIP drive unit 1 includes a housing 2, an introduction path 3, a storage reel 4, a motor 5, a reduction gear 6, a control unit 7, a processor 8, a motor controller 9, and a noise filter 13.

As shown FIG. 1, the housing 2 of the TIP drive unit 1 is provided outside of the reactor container 31. The introduction path 3 penetrates the reactor container 31, and the introduction path 3 is connected to one side of the housing 2. In the housing 2, the storage reel 4, the motor 5, and the reduction gear 6 are provided. One edge of the probe cable 11 is connected to the storage reel 4, and the storage reel 4 configured to storage the probe cable 11.

The motor 5 and the reduction gear 6 comprise a drive mechanism so as to feed the probe cable 11 from the storage reel 4 and spool the probe cable 11 onto the storage reel 4 through the introduction path 3 by rotating the storage reel 4.

The control unit 7 is connected to a central monitoring room 10 so as to receive a operation command 100 from a central monitoring room 10. And the control unit 7 is connected to the motor controller 9 so as to send a drive command 101 to the motor controller 9. Furthermore, the control unit 7 is connected to the indexing device 22 so as to send a indexing command 102 to the indexing device 22. The motor controller 9 is connected to the motor 5 so as to drive the motor 5 by supplying power.

The processor 8 is connected to the motor controller 9 so as to receive drive information 110 from the motor controller 9. Additionally, the processor 8 is connected to the central monitoring room 10 so as to send torque information 111 to the central monitoring room 10. The noise filter 13 is provided on a sending path of information 110 from the motor controller 9 to processor 8. The central monitoring room 10 is connected to the probe cable 11 so as to receive a measured result of neutron flux 130 from the TIP 12 through the probe cable 11.

The opposite end of the probe cable 11 is connected to the TIP 12. The shielding vessel 21 is provided inside of the reactor container 31 and outside of the pedestal 32. The shielding vessel 21 stores and keeps the TIP 12 within. Additionally, the shielding vessel 21 is communicated with the introduction path 3 so as to move the probe cable 11 inside of the introduction path 3 and the shielding vessel 21.

The indexing device 22 is provided outside of the pedestal 32 and inside of the shielding vessel 21. The indexing device 22 is communicated with the shielding vessel 21 so as to move the probe cable 11 and the TIP 12 inside of the shielding vessel 21 and the indexing device 22.

Each guide tube 23 penetrates through the pedestal 32. And the each guide tube 23 is communicated with the indexing device 22 so as to move the probe cable 11 and the TIP 12 inside of the indexing device 22 and the each guide tube 23. Here, the calibration tubes 24 provided in the reactor 33 vertically near the LPRMs. Each guide tube 23 is communicated with the corresponding calibration tube 24 so as to move the probe cable 11 and the TIP 12 into the calibration tubes 24 from the guide tubes 23.

Measuring neutron flux by using TIP system 200 is described as follows. Ordinary, the TIP 12 is stored in the shielding vessel 21. In order to calibrate the sense of LPRMs, at the time of measurement of neutron flux by TIP system 200, the central monitoring room 10 sends the operation command 100 to the control unit 7. The control unit 7 receives the operation command 100, and divides the operation command 100 into the drive command 101 and the indexing command 102. Furthermore, the control unit 7 sends the drive command 101 to the motor controller 9, and sends the indexing command 102 to the indexing device 22.

Here, the drive command 101 indicates predefined distance and rotating speed of motor 5 while the TIP 12 and the probe cable 11 move in the guide tubes 23 and the calibration tubes 24. The indexing command 102 indicates the guide tube 23 that the indexing device 22 index the TIP 12 to the calibration tube 24 designated to measure neutron flux.

The motor controller 9 receives the drive command 10 from the control unit 7, and drives the motor 5 at predefined rotating speed, and feeds the probe cable 11 through the introduction path 3 from the storage reel 4. The motor controller moves the TIP 12 stored in the shielding vessel 21 to the indexing device 22.

The indexing device 22 receives the indexing command 102 from the control unit 7, and index the TIP 12 to the guide tube 23 communicated with the calibration tube 24 designated to measure neutron flux.

Furthermore, the motor controller 9 drives the motor 5 and feeds the probe cable 11 from the storage reel 4, and the TIP 12 moves inside of the calibration tube 24 through the guide tube 23.

TIP 12 measures neutron flux near the LPRMs with moving inside of the calibration tube 24, and sends the measured result of neutron flux 130 to the central monitoring room 10 through the probe cable 11. The central monitoring room 10 calibrates the sensitivity of the LPRMs by using the measured result of neutron flux 130.

After moving the TIP 12 to the predefined end point of inside of the calibration tube 24, the motor controller 9 reverses motor 5 and spools the probe cable 11 onto the storage reel 4, and moves the TIP 12 back to the indexing device 22.

When the operation command 100 includes the command that designates to measure neutron flux in other calibration tube 24, the indexing device 22 indexes the TIP 12 to the other calibration tube 24, and the motor controller 9 moves the TIP 12 inside of other calibration tube 24.

After moving of the TIP 12 in all designated calibration tubes 24, the motor controller 9 spools the probe cable 11 onto the storage reel 4 and stores the TIP 12 in the shielding vessel 21.

Next, calculating cable drive torque is described as follows. Cable drive torque is torque necessary for feeding and spooling the probe cable 11. The control unit 7 commands the motor controller 9 to drive the motor 5 at predefined rotating speed ($\omega$) by using drive command 101.

Here, the motor controller 9 includes a monitoring feature of load fluctuation. This feature monitors the rotating speed ($\omega$) and change supply power (W) so as to keep the predefined rotating speed ($\omega$). This monitoring feature probably applies a method of monitoring the phase shifting of the supply power (W) by a vector analysis.

Along with driving the motor 5 at predefined rotating speed ($\omega$) by drive command 101, the motor controller 9 sends the value of rotating speed ($\omega$) and supply power (W) per unit of time such as 1 second and 10 seconds to the processor 8 as the drive information 110.

In advance, the processor 8 memorizes loss-torque (T0), which is torque necessary for driving the drive mechanism Including the motor 5 and the reduction gear 6 at predefined rotating speed ($\omega$).

The loss-torque (T0) increases in connection with arise of rotating speed ($\omega$), and decreases in connection with arise of oil temperature in the motor 5. In advance, by doing experiment, the values of loss-torque (T0) at various rotating speed ($\omega$) and oil temperature is measured, and the processor 8 memorize the loss-torque (T0) as a function of rotating speed ($\omega$) and oil temperature.

At this point, all torque *(T1),* which is torque necessary for driving the motor 5 and reduction gear 6 and for moving the TIP 12 and the probe cable 11, is indicated by the following formula (1).

$$\text{All torque (T1)} = \text{supply power (W) / rotating speed } (\omega) \ldots (1)$$

Moreover, cable drive torque (T2) that is a torque necessary for moving the probe cable 11 and the TIP 12 in the guide tubes 23 is calculated by deriving from all torque (T1) by loss of loss torque (T0). Thus, cable drive torque (T2) is indicated by the following formula (2).

$$\text{Cable drive torque (T2)} = \text{all torque (T1)} - \text{loss torque (T0)} \ldots (2)$$

The processor 8 calculates the all torque (T1) by using the drive information 110 and formula 1. In addition, the processor 8 calculate the cable drive torque (T2) per unit time by using the value of rotating speed ($\omega$) of the motor 5, the loss torque (T0), and formula 2. The processor 8 sends above calculated result, such as the all torque (T1), the loss torque (T0), and the cable drive torque (T2), to the central monitoring room 10 as torque information 111.

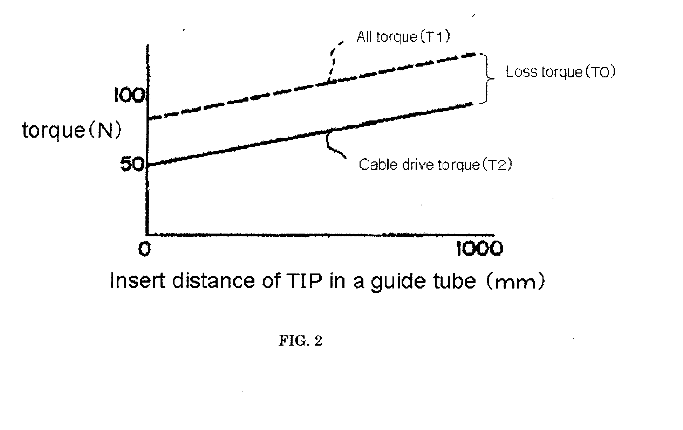

As shown FIG. 2, along with inserting TIP 12 into the guide tube 23, a contact area of the probe cable 11 and the guide tube 23 increase, and the all torque (T1) also increases. On the other hand, the loss torque (T0) stays constant when the rotating speed (ω) stays constant. Thus, regardless of position of TIP 12, the cable drive torque (T2) is calculated by calculating the all torque (T1) by formula 1, and subtracting the loss torque (T0) from the all torque (T1).

The central monitoring room 10 receives cable drive torque (T2) as the torque information 111, and homologize the cable drive torque (T2) and a position of the TIP 12 and the probe cable 12 where the cable drive torque (T2) was measured on the basis of drive command 100.

Furthermore, the central monitoring room 10 may be capable of comparing the cable drive torque (T2) and a normal cable drive torque. When the cable drive torque (T2) exceeds a normal range, the central monitoring room 10 determines that lubricant fell away and a large friction is occurred at the position where the cable drive torque (T2) is measured.

Finally, the function of noise filter 13 is described as follows. The measurement of neutron flux takes long time such as 2 hours, and the motor 5 starts, stops, rotates and reverses during the measurement. Therefore, the motor 5 has a large torque capacity in order to prevent performance decrement due to such as heat generation in the motor 5.

Furthermore, the motor controller 9 includes an inverter so as to drive the motor 5 at various speeds. And the inverter has a plenty of electric capacity so as to spool the probe cable 11 during large friction situation like emergency. Thus, the inverter has a lager electric capacity than necessary for the usual flux measurement, and the motor controller 9 drives the motor 5 at lower electricity than its maximum electric capacity.

Here, the motor 5 and the motor controller 9 generate noise, typically the inverter of the motor controller 9 generates high-frequency noise at operation.

In order to calculate the cable drive torque (T2), a signal indicating the value of supply power (W) is amplified because the supply power (W) is less than a maximum capacity of inverter and the apparent fluctuation of the supply power (W) is small. When the noise is mixed with the signal indicating value of supply power (W), the noise is also amplified and the fluctuation of the signal indicating the value of supply power (W) may hide amongst the noise. In the result, it may be difficult to calculate fluctuation of the cable drive torque (T2) by using the value of supply power (W).

Therefore, the noise filter 13 is provided so as to remove the noise, and the processor 8 calculates the cable drive torque (T2) by using the value of supply power (W) that noise is removed.

A low-pass filter configured to remove the high-frequency noise generated from the inverter may be applied to the noise filter 13. Furthermore, in cases where main noise is power-supply frequency noise generated from the inverter, a low-pass filter configured to remove a higher frequency signal than power-supply frequency is probably provided to the noise filter 13. In addition, the noise filter 13 may be also attached to the inside of the inverter so as to remove noise from the inverter.

Additionally, in another embodiment, the TIP system 200 may be modified as follows. By using the drive command 101, the motor controller 9 may be capable of driving the motor 5 at high-speed while the TIP 12 moves in the guide tube 23, and the motor 5 at low-sp while the TIP 12 moves in the calibration tube 24.

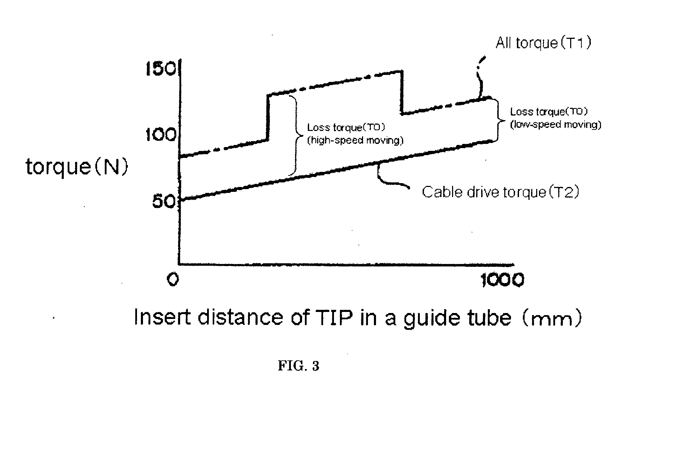

As shown FIG. 3, during high-speed moving the loss torque (T0) is getting higher, and during low-speed moving the loss torque (T0) is getting lower. Thus, processor 8 memorizes the loss torque (T0) in different rotating speed (ω) of motor 5, the processor 8 may be capable of calculating the cable drive torque (T2) while the TIP 12 moves at different speed.

According to this embodiment, the processor 8 may be capable of calculating the cable drive torque (T2) stably by using rotating speed (ω) of motor5, the value of supply power (W) to the motor 5, and loss torque (T0).

Furthermore, because the loss torque (T0) is considered as an intrinsic value of rotating speed (ω), by memorizing loss torque (T0) in different rotating speed (ω), the processor 8 may be capable of calculating the cable drive torque (T2) at various rotating speed of the motor 5. In the result, amount time of moving of the TIP12 at measurement of neutron flex whole is saved, due to high-speed moving in the guide tube 12.

Furthermore, by providing the noise filter 13, the processor 8 may be capable of calculating the cable drive torque by using the signal that the noise is removed.

At this point, in order to apply this embodiment to an existing TIP system, the processor 8 is additionally provided so as to receive the value of rotating speed (ω) and supply power (W). In the result, it does not need to open the housing 2 storing the probe cable 11 radioactibated, and an explosion of utility workers is decreased.

Other embodiments of the invention will be apparent to those skilled in the art from consideration of the specification and practice of the invention disclosed herein. It is intended that the specification and examples be considered as exemplary only, wih a true scope of the intention being indicated by the following claims.

For example, the setting position of the TIP drive unit 1, the indexing device 22, and guide tubes 23 may be changed by a design basis and demand of nuclear power plant.

Furthermore, the drive mechanism feeding and spooling the probe cable 11 is not only comprised by the motor 5 and the reduction gear 6. For example, a component that the motor 5 is attached to a central shaft of the storage reel 4 directly may be applied to the drive mechanism.

Still furthermore, the loss torque (T0) is not only determined as the function of rotation speed (ω) and the oil temperature. For example, the loss torque (T0) may be determined additionally by parameter of aging degradation of the motor 5 and the oil. And the loss torque (T0) may be determined as a function of the rotation speed ($\omega$) or the oil temperature only.

## Claims

1. A Traversing In-core Probe (TIP) drive unit configured for moving a Traversing In-core Probe connected to an edge of a probe cable (11) in a calibration tube (24) provided in a nuclear reactor core and a guide tube (23) communicating with the calibration tube,
   comprising:

   a housing (2) having an introduction path (3);
   a storage reel (4) provided in the housing, and arranged for connecting to another edge of the probe cable;
   a drive mechanism provided in the housing, including a motor (5), the drive mechanism arranged for feeding the probe cable from the storage reel and for spooling the probe cable onto the storage reel through the introduction path;
   a motor controller (9) configured to supply a supply power to the motor, and to drive the motor at a predefined rotating speed;
   a processor (8) calculating a cable drive torque for moving the Traversing In-core Probe and the probe cable in the guide tube and the calibration tube by using
   the value of the supply power for driving the motor received from the motor controller,
   the predefined rotating speed of the motor received from the motor controller, and
   a loss torque for driving the drive mechanism; and
   a noise filter (13) configured to remove noise included in the value of supply power used for calculating the cable drive torque by the processor.

2. The Traversing In-core Probe drive unit of claim 1,
   wherein the motor controller includes an inverter configured to drive the motor, and
   wherein the noise filter is a low-pass filter configured to remove highfrequency noise generated by the inverter.

3. The Traversing In-core Probe drive unit of claim 1,
   wherein the motor controller includes an inverter configured to drive the motor, and
   wherein the noise filter is a low-pass filter configured to remove noise with a frequency higher than the power-supply frequency of the inverter.

4. The Traversing In-core Probe drive unit of claim 2 and 3,
   wherein the motor controller drives the motor at lower electricity than the inverter's maximum electricity capacity at a usual flux measurement.

5. The Traversing In-core Probe drive unit of claim 1,
   wherein the motor controller is configured to drive the motor at a various rotating speed, and
   wherein the processor is configured to calculate the cable drive torque by using the loss-torque depending on the various rotating speed.

6. The Traversing In-core Probe drive unit of claim 4,
   wherein the motor controller is configured to move the Traversing In-core Probe at higher speed in the guide tube than in the calibration tube, and
   wherein the guide tube is curved so as to introduce the Traversing In-core Probe into the calibration tube provided vertically in the nuclear reactor core from the housing through the introduction path.

7. The Traversing In-core Probe drive unit of claim 1, further comprising:

   a central monitoring room (10) configured to send an operation command,
   a control unit (7) configured to receive the operation command from the central monitoring room, and the control unit configured to send a drive command (101) to the motor controller,
   wherein the processor sends a torque information including the cable drive torque to the central monitoring room, and

wherein the central monitoring room is configured to homologize the cable drive torque and the position of the Traversing In-core Probe and the probe cable on the basis of the torque information.

8. The Traversing In-core Probe drive unit of claim 1,
   wherein the processor is configured to compare the cable drive torque with a normal cable drive torque where the inside of the guide tube is coated with the lubricant, and determine the position where the cable drive torque exceeds the normal cable drive torque as lubricant fell away in the guide tube.

9. A method for monitoring friction inside a guide tube connected with a calibration tube provided in a nuclear reactor core,
   comprising:

   moving a Traversing In-core Probe connected to an edge of a probe cable in the guide tube and the calibration tube by means of a drive mechanism including a motor;
   measuring the value of supply power necessary for driving the motor and the value of the predefined rotating speed of the motor;
   calculating the cable drive torque that is the torque necessary for moving the Traversing In-core Probe and the probe cable in the guide tube and in the calibration tube by using
   the value of supply power for driving the motor,
   the value of the predefined rotating speed of the motor, and
   a loss torque for driving the drive mechanism; and
   removing the noise included in the value of supply power used for calculating the cable drive torque by means of a noise filter.

**Patentansprüche**

1. Antrieb für durchlaufende Sonde eines Reaktorkerns (TIP), welche zum Bewegen einer durchlaufenden Sonde eines Reaktorkerns mit einem Ende eines Sondenkabels (11) in einem Kalibrierungsrohr (24) verbunden ist, welches in einem Atomreaktorkern und in einem Führungsrohr (23) bereitgestellt ist, welches mit dem Kalibrierungsrohr kommuniziert,
   umfassend:

   ein Gehäuse (2) mit einem Einführungspfad (3),
   eine Speicherrolle (4), welche in dem Gehäuse bereitgestellt ist und zum Verbinden mit einem anderen Ende des Sondenkabels angeordnet ist,
   ein Antriebsmechanismus, welcher in dem Gehäuse bereitgestellt ist, umfassend einen Motor (5), wobei der Antriebsmechanismus zum Zuführen des Sondenkabels aus der Speicherrolle und zum Aufspulen des Sondenkabels auf der Speicherrolle durch den Einführungspfad angeordnet ist,
   eine Motorsteuerung (9), welche dazu konfiguriert ist, den Motor mit einer Versorgungsleistung zu versorgen und um den Motor mit einer vordefinierten Drehgeschwindigkeit anzutreiben,
   einen Prozessor (8), welcher ein Kabelantriebsdrehmoment zum Bewegen der durchlaufenden Sonde eines Reaktorkerns und des Sondenkabels in dem Führungsrohr und dem Kalibrierungsrohr berechnet, indem er verwendet
   den Wert der Versorgungsleistung zum Antreiben des Motors, welcher aus der Motorsteuerung erhalten wird,
   die vordefinierte Drehgeschwindigkeit des Motors, welche aus der Motorsteuerung erhalten wird, und
   ein Verlustdrehmoment zum Antreiben des Antriebsmechanismus; und
   einen Störfilter (13), welcher dazu konfiguriert ist, Störungen zu entfernen, welche in dem Wert der Versorgungsleistung enthalten sind, welcher zum Berechnen des Kabelantriebsdrehmoments durch den Prozessor verwendet wird.

2. Antrieb für durchlaufende Sonde eines Reaktorkerns nach Anspruch 1,
   wobei die Motorsteuerung einen Inverter aufweist, welcher dazu konfiguriert ist, den Motor anzutreiben, und
   wobei der Störfilter ein Tiefpassfilter ist, welcher dazu konfiguriert ist, Hochfrequenzstörungen zu entfernen, welche von dem Inverter erzeugt werden.

3. Antrieb für durchlaufende Sonde eines Reaktorkerns nach Anspruch 1,
   wobei die Motorsteuerung einen Inverter aufweist, welcher dazu konfiguriert ist, den Motor anzutreiben, und

wobei der Störfilter ein Tiefpassfilter ist, welcher dazu konfiguriert ist, Störungen mit einer Frequenz zu entfernen, welche höher ist als die Stromversorgungsfrequenz des Inverters.

**4.** Antrieb für durchlaufende Sonde eines Reaktorkerns nach Anspruch 2 und 3,
wobei die Motorsteuerung den Motor bei einer geringeren Elektroenergie als der maximalen Elektroenergiekapazität des Inverters bei einer gewöhnlichen Kraftflussmessung antreibt.

**5.** Antrieb für durchlaufende Sonde eines Reaktorkerns nach Anspruch 1,
wobei die Motorsteuerung dazu konfiguriert ist, den Motor bei einer unterschiedlichen Drehgeschwindigkeit anzutreiben, und
wobei der Prozessor dazu konfiguriert ist, das Kabelantriebsdrehmoment unter Verwendung des Verlustdrehmoments in Abhängigkeit von der unterschiedlichen Drehgeschwindigkeit zu berechnen.

**6.** Antrieb für durchlaufende Sonde eines Reaktorkerns nach Anspruch 4,
wobei die Motorsteuerung konfiguriert ist, um die durchlaufende Sonde eines Reaktorkerns mit höherer Geschwindigkeit in dem Führungsrohr als in dem Kalibrierungsrohr zu bewegen, und
wobei das Führungsrohr gekrümmt ist, um so die durchlaufende Sonde eines Reaktorkerns in das Kalibrierungsrohr einzuführen, welches aus dem Gehäuse durch den Einführungspfad vertikal in dem Atomreaktorkern bereitgestellt ist.

**7.** Antrieb für durchlaufende Sonde eines Reaktorkerns nach Anspruch 1, ferner umfassend:

einen zentralen Überwachungsraum (10), welcher dazu konfiguriert ist, einen Betriebsbefehl zu senden,
eine Steuerungseinheit (7), welche dazu konfiguriert ist, den Betriebsbefehl aus dem zentralen Überwachungsraum zu erhalten, und wobei die Steuerungseinheit dazu konfiguriert ist, einen Antriebsbefehl (101) an die Motorsteuerung zu senden,
wobei der Prozessor Drehmomentinformationen, welche das Kabelantriebsdrehmoment umfassen, an den zentralen Überwachungsraum sendet, und
wobei der zentrale Überwachungsraum dazu konfiguriert ist, das Kabelantriebsdrehmoment und die Position der durchlaufenden Sonde eines Reaktorkerns und des Sondenkabels auf der Grundlage der Drehmomentinformationen zu homologisieren.

**8.** Antrieb für durchlaufende Sonde eines Reaktorkerns nach Anspruch 1,
wobei der Prozessor dazu konfiguriert ist, das Kabelantriebsdrehmoment mit einem normalen Kabelantriebsdrehmoment zu vergleichen, bei welchem die Innenseite des Führungsrohrs mit dem Schmierstoff beschichtet ist, und die Position zu bestimmen, bei welcher das Kabelantriebsdrehmoment das normale Kabelantriebsdrehmoment bei nachlassendem Schmierstoff in dem Führungsrohr überschreitet.

**9.** Verfahren zum Überwachen der Reibung innerhalb eines Führungsrohrs, welches mit einem Kalibrierungsrohr verbunden ist, welches in einem Atomreaktorkern bereitgestellt ist,
umfassend:

Bewegen einer durchlaufenden Sonde eines Reaktorkerns, welche mit einem Ende eines Sondenkabels verbunden ist, in dem Führungsrohr und in dem Kalibrierungsrohr mittels eines Antriebsmechanismus, welcher einen Motor umfasst,
Messen des Werts der Versorgungsleistung, welche zum Antreiben des Motors nötig ist, und des Werts der vordefinierten Drehgeschwindigkeit des Motors,
Berechnen des Kabelantriebsdrehmoments, welches das Drehmoment ist, welches zum Bewegen der durchlaufenden Sonde eines Reaktorkerns und des Sondenkabels in dem Führungsrohr und in dem Kalibrierungsrohr nötig ist, indem Folgendes verwendet wird
den Wert der Versorgungsleistung zum Antreiben des Motors,
den Wert der vordefinierten Drehgeschwindigkeit des Motors, und
ein Verlustdrehmoment zum Antreiben des Antriebsmechanismus; und
Entfernen der Störungen, welche in dem Wert der Versorgungsleistung enthalten sind, welcher zum Berechnen des Kabelantriebsdrehmoments verwendet wird, mittels eines Störfilters.

**Revendications**

1. Unité de commande de sonde interne traversante (TIP) configurée pour déplacer une sonde interne traversante reliée à une extrémité d'un câble de sonde (11) dans un tube d'étalonnage (24) prévu dans le coeur d'un réacteur nucléaire et un tube guide (23) communiquant avec le tube d'étalonnage, comprenant :

   un logement (2) comportant un chemin d'introduction (3) ;
   une bobine de stockage (4) prévue dans le logement, et agencée pour être reliée à une autre extrémité du câble de sonde ;
   un mécanisme d'entraînement prévu dans le logement, incluant un moteur (5), le mécanisme d'entraînement étend agencé pour fournir le câble de sonde depuis la bobine de stockage et pour enrouler le câble de sonde sur la bobine de stockage par l'intermédiaire du chemin d'introduction ;
   un contrôleur de moteur (9) configuré pour fournir une alimentation au moteur, et pour commander le moteur à une vitesse de rotation prédéfinie ;
   un processeur (8) calculant un couple d'entraînement de câble pour déplacer la sonde interne traversante et le câble de sonde dans le tube guide et le tube d'étalonnage en utilisant
   la valeur de l'alimentation pour commander le moteur, reçue depuis le contrôleur de moteur,
   la vitesse de rotation prédéfinie du moteur, reçue depuis le contrôleur de moteur, et
   un couple de perte pour commander le mécanisme d'entraînement ; et
   un filtre de bruit (13) configuré pour éliminer le bruit induit dans la valeur de l'alimentation utilisée pour calculer le couple d'entraînement du câble par le processeur.

2. Unité de commande de sonde interne traversante selon la revendication 1,
   dans laquelle le contrôleur de moteur comporte un onduleur configuré pour commander le moteur, et
   dans laquelle le filtre de bruit est un filtre passe bas configuré pour éliminer le bruit à haute fréquence généré par l'onduleur.

3. Unité de commande de sonde interne traversante selon la revendication 1,
   dans laquelle le contrôleur de moteur comporte un onduleur configuré pour commander le moteur, et
   dans laquelle le filtre de bruit est un filtre passe bas configuré pour éliminer le bruit ayant une fréquence supérieure à la fréquence d'alimentation de l'onduleur.

4. Unité de commande de sonde interne traversante selon les revendications 2 et 3,
   dans laquelle le contrôleur de moteur commande le moteur avec moins d'électricité que la capacité électrique maximale de l'onduleur pour une mesure de flux habituelle.

5. Unité de commande de sonde interne traversante selon la revendication 1,
   dans laquelle le contrôleur de moteur est configuré pour commander le moteur à diverses vitesses de rotation, et
   dans laquelle le processeur est configuré pour calculer le couple d'entraînement du câble en utilisant le couple de perte en fonction des diverses vitesses de rotation.

6. Unité de commande de sonde interne traversante selon la revendication 4,
   dans laquelle le contrôleur de moteur est configuré pour déplacer la sonde interne traversante à une plus grande vitesse dans le tube guide que dans le tube d'étalonnage, et
   dans laquelle le tube guide est incurvé de façon à introduire la sonde interne traversante dans le tube d'étalonnage disposé verticalement dans le coeur du réacteur nucléaire depuis le logement à travers le chemin d'introduction.

7. Unité de commande de sonde interne traversante selon la revendication 1, comprenant en outre :

   une salle de contrôle centrale (10) configurée pour envoyer une commande d'exploitation,
   une unité de commande (7) configurée pour recevoir la commande d'exploitation provenant de la salle de contrôle centrale, et l'unité de commande étant configurée pour envoyer une commande de fonctionnement (101) au contrôleur de moteur,
   dans laquelle le processeur envoie une information de couple incluant le couple d'entraînement du câble à la salle de contrôle centrale, et
   dans laquelle la salle de contrôle centrale est configurée pour faire correspondre le couple d'entraînement du câble et la position de la sonde interne traversante et du câble de sonde en se basant sur l'information de couple.

8. Unité de commande de sonde interne traversante selon la revendication 1,
dans laquelle le processeur est configuré pour comparer le couple d'entraînement du câble avec un couple d'entraînement de câble normal où l'intérieur du tube guide est recouvert du lubrifiant, et pour déterminer la position où le couple d'entraînement du câble dépasse le couple d'entraînement de câble normal à mesure que le lubrifiant s'échappe dans le tube guide.

9. Procédé pour surveiller la friction à l'intérieur d'un tube guide relié à un tube d'étalonnage disposé dans le coeur d'un réacteur nucléaire,
comprenant :

le déplacement d'une sonde interne traversante reliée à une extrémité d'un câble de sonde dans le tube guide et le tube d'étalonnage, au moyen d'un mécanisme d'entraînement incluant un moteur ;
la mesure de la valeur de l'alimentation nécessaire pour commander le moteur et de la valeur de la vitesse de rotation prédéfinie du moteur ;
le calcul du couple d'entraînement du câble, qui est le couple nécessaire pour déplacer la sonde interne traversante et le câble de sonde dans le tube guide et le tube d'étalonnage en utilisant
la valeur de l'alimentation pour commander le moteur,
la valeur de la vitesse de rotation prédéfinie du moteur, et
un couple de perte pour commander le mécanisme d'entraînement ; et
l'élimination du bruit induit dans la valeur de l'alimentation utilisée pour calculer le couple d'entraînement du câble au moyen d'un filtre de bruit.

FIG. 1

All torque (T1)

Loss torque (TO)

torque (N)

Cable drive torque (T2)

100

50

0                                    1000

Insert distance of TIP in a guide tube (mm)

FIG. 2

FIG. 3

**EP 2 418 650 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010150436 A
- JP 2002071483 A
- JP SYO63163196 B